# EUROPÄISCHE PATENTANMELDUNG

(11) **EP 3 203 610 A1**
(43) Veröffentlichungstag der Anmeldung: **09.08.2017**
(21) Anmeldenummer: 17153671.7
(22) Anmeldetag: 30.01.2017
(51) Int. Cl.: H02K 3/34, H02K 3/48

(54) **TRÄGER FÜR SPULEN EINER ELEKTROMASCHINE**

(30) Priorität: 03.02.2016 DE 102016001211
(71) Anmelder: Audi AG, 85045 Ingolstadt (DE)
(72) Erfinder: Straßer, Roman, 85080 Gaimersheim (DE); Westermaier, Christian, 85229 Markt Indersdorf (DE)

(57) **Zusammenfassung**

Die Erfindung betrifft einen Träger (4) für Spulen einer Elektromaschine, der ein rotationssymmetrisches Trägerpaket (2) aus Trägerblechen mit axial orientierten Nuten aufweist, wobei jeweils eine Nut zur Aufnahme von Draht der Spulen vorgesehen ist, wobei zwei unmittelbar benachbarte Nuten durch eine Nutwand voneinander getrennt sind, wobei Stirnseiten (12, 14) des Trägerpakets (2) kreisringförmig ausgebildet sind und Öffnungen (20a) für die Nuten aufweisen, wobei zumindest auf Nutwänden mindestens einer Stirnseite (12, 14) elektrisch isolierendes Material angeordnet ist, das die Nutwände stirnseitig abdeckt und elektrisch isoliert.

## Beschreibung

Die Erfindung betrifft einen Träger für Spulen einer Elektromaschine sowie ein Verfahren zum Herstellen eines Trägers für Spulen einer Elektromaschine.

Eine Elektromaschine weist als mechanische Komponenten einen Stator und einen Rotor auf, wobei mindestens eine dieser beiden Komponenten Nuten aufweist, in denen Draht verlegt ist, wobei dieser Draht Spulen der mindestens einen Komponente bildet.

Ein Wickelkopf-Isolationselement ist aus der Druckschrift DE 10 2007 044 149 B3 bekannt und umfasst einen Korpus, der eine erste und zweite Längsseite sowie eine erste und zweite Querseite aufweist, sowie eine Lasche, wobei der Korpus und die Lasche aus einem flächigen Material gebildet sind.

Eine elektrische Maschine mit einem Rotor, einem Stator, einem Gehäuse und zwei Wickelköpfen ist in der DE 10 2013 223 051 A1 beschrieben. Jeder der Wickelköpfe weist einen Verguss aus elektrisch isolierendem Kunststoff auf, wobei die Wickelköpfe in axialen Endbereichen von Statorwicklungen an Stirnenden des Stators vergossen sind. Dabei ist zwischen jedem Verguss der Wickelköpfe und einem benachbarten Bereich des Gehäuses Isolationspapier zwischengelagert.

Die Druckschrift DE 20 2004 010 956 U1 beschreibt eine Einrichtung zur Isolation von Statornuten einer elektrischen Maschine, die einen Stator mit einer Vielzahl von Hämmern und zwischen den Hämmern liegenden Statornuten aufweist. Ein Isolationskörper umfasst Ausformungen, die an eine Form der Statornuten angepasst ist und in axialer Richtung auf den Stator aufschiebbar ist.

Vor diesem Hintergrund werden ein Träger und ein Verfahren mit den Merkmalen der unabhängigen Patentansprüche vorgestellt. Ausgestaltungen des Trägers und des Verfahrens gehen aus den abhängigen Patentansprüchen und der Beschreibung hervor.

Der erfindungsgemäße Träger für Spulen einer Elektromaschine umfasst ein rotationssymmetrisches, bspw. zylinderförmiges und/oder hohlzylinderförmiges Trägerpaket aus Trägerblechen mit axial orientierten Nuten, wobei jeweils eine Nut zur Aufnahme von Draht der Spulen vorgesehen ist. Hierbei sind jeweils zwei unmittelbar benachbarte Nuten durch eine Nutwand voneinander getrennt. Das Trägerpaket umfasst zwei Stirnseiten, die kreisringförmig ausgebildet sind und axial orientierte Öffnungen für die Nuten aufweisen. Zumindest auf Nutwänden mindestens einer Stirnseite ist elektrisch isolierendes Material bzw. ein Isolationsmedium angeordnet, das die Nutwände stirnseitig abdeckt und elektrisch isoliert.

Dabei ist auf einer jeweiligen Stirnseite in der Regel eine Schicht aus dem elektrisch isolierenden Material anzuordnen und die Stirnseite mit dem Material zu beschichten.

In Ausgestaltung ist das elektrisch isolierende Material, üblicherweise eine Schicht des elektrisch isolierenden Materials, komplett auf der mindestens einen Stirnseite angeordnet, wodurch die mindestens eine Stirnseite durch das elektrisch isolierende Material stirnseitig abgedeckt und elektrisch isoliert ist. In diesem Fall weist das elektrisch isolierende Material bzw. Isolationsmedium, d. h. eine Schicht des elektrisch isolierenden Materials, dieselbe Form wie die mindestens eine Stirnseite des Trägerpakets auf und ist zu dieser Stirnseite deckungsgleich ausgebildet.

Das üblicherweise flache elektrisch isolierende Material ist als Isolationspapier ausgebildet und/oder zu bezeichnen.

In weiterer Ausgestaltung ist eine Innenwand jeweils einer Nut mit dem elektrisch isolierenden Material abgedeckt und elektrisch isoliert.

In den Nuten des Trägers ist Draht angeordnet. Draht, der sich außerhalb der Nuten zwischen einer ersten Nut und einer zweiten Nut erstreckt, ist auf dem elektrisch isolierenden Material auf der mindestens einen Stirnseite angeordnet und als Teil eines Wickelkopfs ausgebildet. Dabei trennt das elektrisch isolierende Material den darauf üblicherweise formschlüssig aufliegenden Draht des Wickelkopfs von dem Trägerpaket.

Der vorgestellte Träger ist als Stator oder Rotor der Elektromaschine ausgebildet.

Eine Elektromaschine, die als Motor und/oder als Generator zu verwenden ist, weist mindestens einen rotationssymmetrischen Träger mit einer Anzahl Nuten auf, in die zum Bereitstellen von Spulen der Draht zu wickeln und/oder gewickelt ist. Abschnitte des Drahts außerhalb der Nuten bilden einen Wickelkopf. In Ausgestaltung ist auf einer oberen und einer unteren Stirnseite des Trägerpakets, das Trägerbleche umfasst, als Isolationspapier ausgebildetes Isolationsmedium angeordnet, durch das jeweils ein Wickelkopf von dem Trägerpaket getrennt und elektrisch isoliert ist.

In weiterer Ausgestaltung ist das elektrisch isolierende Material nicht nur elektrisch isolierend, sondern auch thermisch leitfähig ausgebildet, wodurch Wärme zumindest von der mindestens einen Stirnseite des Trägerpakets besser abzuführen ist. Ein derartiges elektrisch isolierendes Material, das elektrisch isolierend sowie thermisch leitfähig ausgebildet ist, wird auch als Kombimaterial bezeichnet und ist in der Elektronik einzusetzen. Hierbei ist möglich, ein derartiges Kombimaterial als Folie bereitzustellen, wobei das Kombimaterial elektrisch isolierend sowie thermisch gut leitend ist.

Bei dem erfindungsgemäßen Verfahren zum Herstellen eines Trägers für Spulen einer Elektromaschine wird ein rotationssymmetrisches, bspw. hohlzylinderförmiges Trägerpaket aus Trägerblechen mit axial orientierten Nuten bereitgestellt, wobei jeweils eine Nut zur Aufnahme von Draht der Spulen vorgesehen ist. Dabei sind zwei unmittelbar benachbarte Nuten durch eine Nutwand voneinander getrennt, wobei Stirnseiten des Trägerpakets kreisringförmig ausgebildet sind und Öffnungen für die Nuten aufweisen. Bei dem Verfahren wird zumindest auf Nutwänden mindestens einer Stirnseite eine Schicht aus elektrisch isolierendem Material bzw. ein Isolationsmedium angeordnet, das die Nutwände stirnseitig abdeckt und elektrisch isoliert.

Das elektrisch isolierende Material weist dieselbe Form wie die mindestens eine Stirnseite auf und ist zu dieser Stirnseite deckungsgleich ausgebildet, wobei sowohl das elektrisch isolierende Material bzw. das Isolationsmedium als auch die Stirnseite kreisringförmig ausgebildet sind und Löcher für die Nuten aufweisen. Das zum Herstellen des Trägers geformte elektrisch isolierende Material wird auf der mindestens einen Stirnseite angeordnet.

Zum Befestigen wird das in einer Schicht vorliegende elektrisch isolierende Material auf der mindestens einen Stirnseite aufgeklebt.

Ergänzend ist möglich, dass auf einer Innenwand jeweils einer Nut elektrisch isolierendes Material angeordnet wird, wobei die Innenwand der jeweiligen Nut mit dem elektrisch isolierenden Material ausgekleidet wird.

Außerdem wird in den Nuten Draht verlegt, wobei Draht, der zwischen einer ersten Nut und einer zweiten Nut verlegt wird, auf dem elektrisch isolierenden Material unter Bereitstellung eines Teils eines Wickelkopfs auf der mindestens einen Stirnseite angeordnet wird. Dabei ist möglich, dass die die erste und zweite Nut unmittelbar benachbart und lediglich durch eine gemeinsame Nutwand voneinander getrennt sind. Je nach Art einer Wicklung ist alternativ oder ergänzend möglich, dass sich zwischen der ersten und der zweiten Nut mindestens eine weitere Nut befindet. Bei einer Elektromaschine mit drei Phasen befinden sich zwischen der ersten und zweiten Nut zwei weitere Nuten.

Zur Umsetzung des Verfahrens wird für mindestens einen Wickelkopf, in der Regel für beide Wickelköpfe, das elektrisch isolierende Material und somit das Isolationsmedium verwendet, das z. B. als ausgestanztes Isolationspapier ausgebildet ist, das eine identische oder ähnliche geometrische Form wie die mindestens eine Stirnseite des Trägerpakets aufweist.

Daraus ergibt sich u. a., dass ein Wickelkopf in axialer Richtung stärker verpresst werden kann, womit eine Leistungsdichte der Elektromaschine erhöht werden kann, da für den Träger der Elektromaschine bei gleicher Leistung weniger Bauraum benötigt wird.

Wenn außerdem statt des reinen elektrisch isolierenden Materials bzw. Isolationsmediums, in der Regel Isolationspapier, das Kombimaterial verwendet wird, das zwar einerseits elektrisch isoliert, aber auch andererseits Abwärme der stromdurchflossenen Drähte der Wickelköpfe an das Trägerblech weiter leitet, ist eine Leistung der Elektromaschine zu erhöhen.

Das elektrisch isolierende Material ist auf der mindestens einen Stirnseite des Trägerpakets einfach aufzulegen und z. B. über eine Klebefläche am Trägerpaket zu fixieren. So kann das elektrisch isolierende Material beim Wickeln der Spulen nicht verrutschen.

Zusätzlich ist möglich, einen letzten noch verbleibenden Spalt zwischen einem als Statorblech ausgebildeten Trägerblech und einem als Rotorblech ausgebildeten Trägerblech, z. B. per Träufeln, zu vergießen, womit die Leistung der Elektromaschine erhöht werden kann.

Das Verfahren ist auch für eine Elektromaschine, die bspw. als fremderregte Synchronmaschine (FSM) ausgebildet ist, anwendbar, die Spulen bzw. Wicklungen in dem als Rotor ausgebildeten Träger aufweist.

In den Nuten des Trägerpakets der Elektromaschine wird vor dem Einlegen und/oder Wickeln der Drähte Isolationspapier als Isolation zwischen den Drähten aus Kupfer und dem Trägerpaket eingelegt sowie auf die Stirnseiten des Trägerpakets aufgelegt. Damit ist Draht ohne Luftspalt in eine jeweilige Nut eng einzulegen. Somit wird auch ein jeweiliger Wickelkopf von dem Trägerpaket elektrisch isoliert. Der Wickelkopf bzw. die zwischen den Nuten verlaufenden Drähte, die den Wickelkopf bilden, sind direkt und ohne Luftspalt auf dem elektrisch isolierenden Material aufzulegen, wobei die Drähte durch elektrisch isolierendes Material getrennt indirekt auf der jeweiligen Stirnseite des Trägerpakets aufzulegen sind. Somit ist Bauraum einzusparen und ein Wärmeübergang zwischen dem Trägerpaket und dem Wickelkopf zu verbessern. Bei Umsetzung des Verfahrens ist nicht erforderlich, den Wickelkopf zur elektrischen Isolierung mit Isoliermaterial zu bandagieren.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung ein Trägerpaket und elektrisch isolierendes Material einer Ausführungsform des erfindungsgemäßen Trägers aus einer ersten Perspektive.
Figur 2 zeigt das elektrisch isolierende Material aus Figur 1 in Draufsicht.
Figur 3 zeigt die Ausführungsform des Trägers aus Figur 1 in schematischer Schnittdarstellung.

Die Figuren werden zusammenhängend und übergreifend beschrieben, gleichen Komponenten sind dieselben Bezugsziffern zugeordnet.

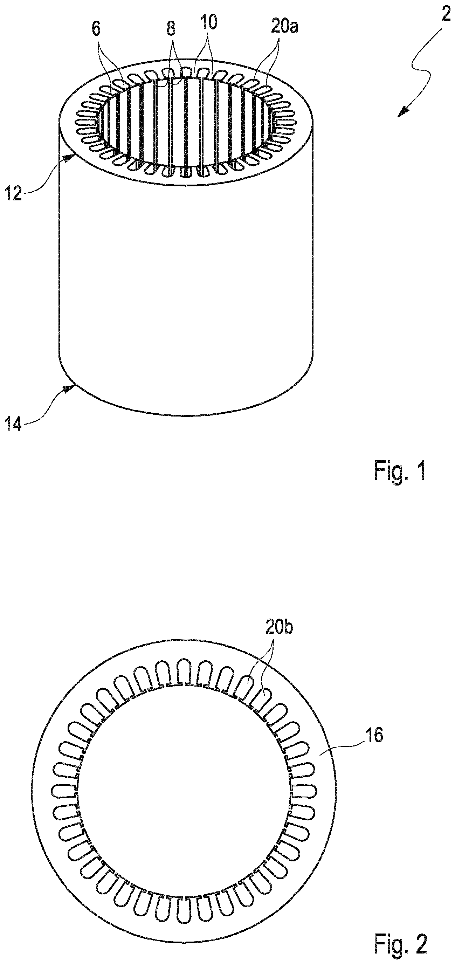

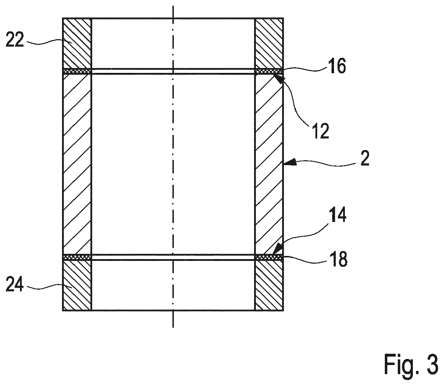

Figur 1 zeigt in schematischer Darstellung ein hier hohlzylinderförmiges Trägerpaket 2 für einen in Figur 3 schematisch in Schnittdarstellung gezeigten Träger 4, der als Stator oder Rotor einer Elektromaschine zu verwenden ist. In einer Innenwand des Trägerpakets 2 sind mehrere Nuten 6 mit Nutschlitzen 8 angeordnet, wobei zwei unmittelbar benachbarte Nuten 6 durch eine gemeinsame Nutwand 10 je nach Definition voneinander getrennt und/oder miteinander verbunden sind. Außerdem umfasst das Trägerpaket 2 eine obere Stirnseite 12 und eine untere Stirnseite 14, die beide kreisringförmig ausgebildet sind und Öffnungen 20a bzw. Löcher für die Nuten 6 aufweisen.

Dabei ist auf beiden Stirnseiten 12, 14 jeweils eine Schicht 16, 18 aus elektrisch isolierendem Material angeordnet, wobei eine erste Schicht 16 aus elektrisch isolierendem Material die obere Stirnseite 12 und eine zweite Schicht 18 aus elektrisch isolierendem Material die untere Stirnseite 14 abdeckt. Die erste Schicht 16 ist in Figur 2 in Draufsicht gezeigt. Figur 3 zeigt beide Schichten 16, 18 des elektrisch isolierenden Materials in Schnittansicht.

Hierbei ist vorgesehen, dass eine jeweilige Schicht 16, 18 aus dem elektrisch isolierenden Material deckungsgleich zu einer jeweiligen Stirnseite 12, 14 ausgebildet ist, auf der diese Schicht 16, 18 aus elektrisch isolierendem Material anzuordnen, hier aufzukleben und somit die jeweilige Stirnseite 12, 14 zu beschichten ist. Dabei ist die erste Schicht 16 aus elektrisch isolierendem Material, wie u. a. Figur 2 zeigt, kreisringförmig ausgebildet und weist ebenfalls Löcher 20b für die Nuten 6 auf.

Zum Herstellen der Trägers 4 werden auch Innenwände der Nuten 6 mit dem elektrisch isolierenden Material beschichtet, danach wird in die Nuten 6 Draht eingelegt. Draht, der hierbei zwischen zwei Nuten 6 verlegt wird, bildet hier einen ersten Wickelkopf 22 an der oberen Stirnseite 12 und einen zweiten Wickelkopf 24 an der unteren Stirnseite 14.

Wie hierzu Figur 3 zeigt, liegt Draht jeweils eines Wickelkopfs 22, 24 auf jeweils einer Schicht 16, 18 aus dem elektrisch isolierenden Material auf, das auf der jeweiligen Stirnseite 12, 14 durch Aufkleben befestigt ist. Somit ergibt sich, dass der Draht des jeweiligen Wickelkopfes 22, 24 von dem Trägerpaket 2 elektrisch isoliert wird.

## Patentansprüche

1. Träger für Spulen einer Elektromaschine, der ein rotationssymmetrisches Trägerpaket (2) aus Trägerblechen mit axial orientierten Nuten (6) aufweist, wobei jeweils eine Nut (6) zur Aufnahme von Draht der Spulen vorgesehen ist, wobei zwei unmittelbar benachbarte Nuten (6) durch eine Nutwand (10) voneinander getrennt sind, wobei Stirnseiten (12, 14) des Trägerpakets (2) kreisringförmig ausgebildet sind und Öffnungen (20a) für die Nuten (6) aufweisen, wobei zumindest auf Nutwänden (10) mindestens einer Stirnseite (12, 14) elektrisch isolierendes Material angeordnet ist, das die Nutwände (10) stirnseitig abdeckt und elektrisch isoliert.

2. Träger nach Anspruch 1, bei dem das elektrisch isolierende Material auf der mindestens einen Stirnseite (12, 14) angeordnet ist und die mindestens eine Stirnseite (12, 14) stirnseitig komplett abdeckt und elektrisch isoliert.

3. Träger nach Anspruch 2, bei dem das elektrisch isolierende Material dieselbe Form wie die mindestens eine Stirnseite (12, 14) aufweist.

4. Träger nach einem der voranstehenden Ansprüche, bei dem das elektrisch isolierende Material als Isolationspapier ausgebildet ist.

5. Träger nach einem der voranstehenden Ansprüche, bei dem eine Innenwand jeweils einer Nut (6) mit dem elektrisch isolierenden Material abgedeckt und elektrisch isoliert ist.

6. Träger nach einem der voranstehenden Ansprüche, bei dem in den Nuten (6) Draht angeordnet ist, wobei Draht, der sich außerhalb der Nuten (6) zwischen einer ersten Nut (6) und einer zweiten Nut (6) erstreckt, auf dem elektrisch isolierenden Material auf der mindestens einen Stirnseite (12, 14) angeordnet und als Teil eines Wickelkopfs (22, 24) ausgebildet ist.

7. Träger nach einem der voranstehenden Ansprüche, der als Stator oder Rotor der Elektromaschine ausgebildet ist.

8. Träger nach einem der voranstehenden Ansprüche, bei dem das elektrisch isolierende Material thermisch leitfähig ausgebildet ist.

9. Verfahren zum Herstellen eines Trägers (4) für Spulen einer Elektromaschine, bei dem ein rotationssymmetrisches Trägerpaket (2) aus Trägerblechen mit axial orientierten Nuten (6) bereitgestellt wird, wobei jeweils eine Nut (6) zur Aufnahme von Draht der Spulen vorgesehen ist, wobei zwei unmittelbar benachbarte Nuten (6) durch eine Nutwand (10) voneinander getrennt sind, wobei Stirnseiten (12, 14) des Trägerpakets (2) kreisringförmig ausgebildet sind und Öffnungen (20a) für die Nuten (6) aufweisen, wobei zumindest auf Nutwänden (10) mindestens einer Stirnseite (12, 14) elektrisch isolierendes Material angeordnet wird, das die Nutwände (10) stirnseitig abdeckt und elektrisch isoliert.

10. Verfahren nach Anspruch 9, bei dem elektrisch isolierendes Material, das dieselbe Form wie die mindestens eine Stirnseite (12, 14) aufweist, hergestellt und auf der mindestens einen Stirnseite (12, 14) angeordnet wird.

11. Verfahren nach Anspruch 9 oder 10, bei dem das elektrisch isolierende Material auf der mindestens einen Stirnseite (12, 14) aufgeklebt wird.

12. Verfahren nach einem der Ansprüche 9 bis 11, bei dem auf einer Innenwand jeweils einer Nut (6) elektrisch isolierendes Material angeordnet wird.

13. Träger nach einem der Ansprüche 9 bis 12, bei dem in den Nuten (6) Draht verlegt wird, wobei Draht, der zwischen einer ersten Nut (6) und einer zweiten Nut (6) verlegt wird, auf dem elektrisch isolierenden Material unter Bereitstellung eines Teils eines Wickelkopfs (22, 24) auf der mindestens einen Stirnseite (12, 14) angeordnet wird.
